# EUROPEAN PATENT SPECIFICATION

(11) **EP 3 466 234 B1**
(45) Date of publication and mention of the grant of the patent: **26.07.2023**
(21) Application number: 17805425.0
(22) Date of filing: 31.05.2017
(51) Int. Cl.: A01B 73/06

(54) **IMPROVEMENTS TO THE FOLDABILITY OF THE ARTICULATED LATERAL CHASSIS OF FARMING MACHINES**
VERBESSERUNGEN AN DER FALTBARKEIT DES GELENKIGEN SEITLICHEN CHASSIS VON LANDWIRTSCHAFTLICHEN MASCHINEN
AMÉLIORATIONS APPORTÉES AU PLIAGE DES CHÂSSIS LATÉRAUX ARTICULÉS DANS DES MACHINES AGRICOLES

(30) Priority: 31.05.2016 AR P160101584
(43) Date of publication of application: 10.04.2019
(73) Proprietor: Talleres Metalurgicos Crucianelli S.A., Prov de Santa Fé (AR); Crucianelli Maquinas Agricolas Do Brasil Comércio, Importação E Exportação LTDA, 99051-190 - Passo Fundo - RS (BR)
(72) Inventor: CRUCIANELLI, Gustavo, Armstrong Santa Fé (AR)
(74) Representative: Clarke Modet & Co.
(86) International application number: PCT/BR2017/000058
(87) International publication number: WO 2017/205950

(56) References cited:
- BR-A- 8 404 567
- BR-U- MU8 400 564
- US-A- 4 319 643
- US-A1- 2013 233 580
- US-A1- 2014 096 983
- US-B2- 7 469 648

## Description

### Field of the invention

The present invention relates to improvements introduced in the folding and the folding means applied to the lateral chassis of agricultural machinery.
More specifically, the present invention is applicable to all agricultural machinery having a chassis formed by a central section and at least two hinged portions at each lateral end thereof.

### Nomenclature of terms as used in the present specifications and claims

Hereinafter it will be understood that the following terms have the following meanings:
**FOLDING and FOLDABILITY:** By this term it is to be understood the action by means of which a hinged portion of the chassis of the agricultural machine is angularly displaced in a substantially horizontal plane, to another central section thereof.
**CHASSIS:** This term designates the structure of the agricultural machine carrying the seeds planters, the furrow openers, seed dispensers, and other related piece of equipment.
**CONTAINER:** This term indicate any container or hopper carried by the agricultural machinery within which it is possible to store any agrochemical, and seeds such as liquids, fertilizers, etc. They are also known as "feeders".
**SEED DEPOSITION AND/OR FERTILIZER DEVICES:** This term identifies all means of distribution and deposit in the soil of seeds and/or fertilizers from said containers. They are also known as "seed line" and "fertilizer line"
**WHEEL TRAIN:** It identifies the wheels and suspension of the agricultural machine same on which it sits, bearing chassis of the agricultural machine.

### Background of the invention

Agricultural machines with collapsible or articulated chassis are known in the art. These chassis folding devices are a necessity since in many constructions of agricultural machines, such as seeders, when in their operative configuration, said chassis are placed perpendicular to the direction of travel with a working length that spans 10 meters or more. However, these agricultural machines when they have to travel from one plot to work in another plot, they must necessarily be transported on roads and paths, therefore when non operative and in its travel configuration, the chassis must be folded, until an acceptable transport width is reached.

To this end, there is a number of safety regulations requiring these agricultural machines to have a maximum width when travelling on roads, in order to allow the transit of other vehicles under safety conditions.

Examples of the known prior art are illustrated by the following documents:
a) US Patent 5.113.956**.** This patent, already in the public domain, anticipates the forward folding of the hinged chassis portion of an agricultural machine.
b) US Patent application 2005/0087350 A1**.** This published patent application teaches a planter with a fixed central chassis of three or five sections. Said document indicates the existence of a central chassis (210a), to which the collapsible lateral chassis (210b) articulate, pivoting forwardly rotating at the ends of (210a). The actuator hydraulic cylinders force the forward rotation of the lateral chassis, which are attached to oblique fixed non-extensible braces having one of their ends articulated to each of said lateral chassis, and the other end of each brace is linked to a telescopic portion of the tongue, usually perpendicular to the central chassis. Said central telescopic tongue defines at its free end the towing attachment of the agricultural machine. That is, when folding the lateral chassis, as the folding progresses, usually in a horizontal plane, said braces push forward a telescopic portion (520) of the central tongue, which emerges from the fixed portion of said tongue (530) integral with the central chassis. This folding arrangement is common knowledge in the industry and is adopted by most manufacturers of agricultural machinery of this type. It is observed in the drawings that the rolling train or supporting wheel train is linked to the central chassis, and is formed by one or two pairs of coaxially aligned wheels. The seed and/or fertilizer containers are distributed over the various sections of the chassis, generally supplied by gravity to the means depositing them on the soil. These deposition devices are also known in the art. The prior art construction further teaches the use of support wheels (44) placed at the free ends of the lateral chassis on which said articulated lateral chassis rests.
c) **Brazilian Utility Model application** BR 20 2012 030225-5 U2. This published patent application, teaches several folding sections of the chassis of a planter supported at all times on wheels. In fact, in US application 2005/0087350 A1 the folded lateral chassis are attached to portions of the central tongue, which remains cantilevered with respect to the traction hitch, subjecting the whole structure to significant compound bending and torsion loads, while in this Brazilian application, the whole set is improved by always supporting the chassis on wheels.
   On the other side, this BR 20 2012 030225-5 U2 application is partially anticipated in its general concept by the Brazilian patent PI 0001239-4 A, published in 2001.
d) US Patent application 2014/096983 A1**.** This published patent application describes a planter machine, with a chassis comprising a central section, and two lateral hinged portions supporting row units. Said lateral hinged portions are selectively forward folded and hinged to the central section. To said central section a tongue is perpendicularly attached. Within said fixed tongue, a telescopic tongue is selectively displaced. Each lateral hinged portions has a tongue support or strut linking it to the extendable or telescopic tongue, while the actual folding motion is urged through oleo dynamic cylinders hinged direct at one end to the corresponding lateral hinged portion and the other cylinder's end hinged to the fixed tongue.
e) US Patent 7.469.648**.** This patent, already in the public domain, discloses an agricultural machine having hinged portions of the chassis hinged far away from the central chassis section thus reducing the length of each lateral hinged portions.
f) US Patent Application 4.319.643 A**.** This published patent application discloses an agricultural machine having all the general common features of the present claim 1 but with hinged portions that are hinged to the ends of the central section in a very different constructional way with respect to the present application.

### Problems found in the prior art constructions:

One of the main problems found in the prior art constructions is that once folded for transport, these agricultural machines still presents a very wide front, generally in excess of 4 meters, which infringes the road safety rules placing in dire danger the rest of the vehicles travelling along the same roads.

Another of the problems found in some of the prior art is that the overall stability of the planter is precarious, due to the distribution of the containers or hoppers placed throughout the entire length of the chassis, displacing its centre of gravity towards the sides, with the disadvantage that not always these containers distributed along the chassis are uniformly emptied, introducing important imbalances affecting the stability and running of the agricultural machine.

The provision of shells to the sections of the chassis requires an excessive amount of time to replace their contents, as long as it does not allow proper selection of the functions of seed and/or fertilizer application. In fact, if we need to put fertilizer on a part of the land, the containers must be preloaded with the same, even if we consider the planting, i.e. the current machines do not have the necessary operational flexibility, resulting in excessive operational times in the recharge and control of deposits.

The above leads to the reasoning that in the prior art machines, even in the ones such as teached by patent BR 20 2012 030225-5 U2, wherein it is mentioned the possibility to issue on the ground fertilizers and/or seed from a same agricultural device or machine, the containers or bins disposition impedes a rapid selection of the deposition devices applying the necessary working flexibility under said machine operative conditions, thus avoiding unnecessary time-out.

Also, the arrangement of said containers when placed upon the chassis of the agricultural machine, implies that its structure must be reinforced in order to sustain the quite relevant stresses provided by the mass of said containers, mainly when on transit in its operative condition (i.e. with the chassis deployed) over uneven ground.

Last, it has been found that in the known prior art embodiments the arrangement of the wheels usually presents problems in the distribution of the mass of the machine, having their wheels aligned along a single axis.

### Objects of the present invention

It is therefore object of the present invention to provide a design of an agricultural machine offering a solution to each of the above-mentioned problems with the necessary improvements presented in the present invention.

It is a first object of the present invention to design an agricultural machine capable to achieve the necessary operative flexibility when seed sowing and at the same time capable to dispense fertilizers, or to sow only the seeds, or to only deposited on the ground the fertilizer, without having to detain or stop the machine and without having to redistribute the load on each container thus achieving an agricultural machine with a very high productive yield and providing a notable reduction on the operative time-out.

Is also an object of this invention an agricultural machine capable to be selectively loaded with either fine or coarse seeds and fertilizer, and selectively applying said containers according to the work time-table, allowing to replenish said containers or bins without having to detain said machine or having to resort to onerous replenishing procedures.

It is another object of the invention an agricultural machine having means for closing the hinged chassis portions decreasing, when folded, the total size of its width in a range of 3 meters to 3.90 meters, thus complying with the legal dimensions for its transport.

It is also an object of the invention to place the wheels supporting the central chassis section distributed in pairs on two parallel axes, increasing the support base and stability of the machine.

It is another object of the present invention to place said containers or bins over the central chassis section, and more specifically over the area delimited by the wheel train supporting said central chassis section allowing the machine's enhanced stability and easier access to said containers, leaving the hinged chassis portion without the burden of having to support the load of said containers.

Last, is also object of the present invention that, from said centralized containers, its contents, such as seeds and/or fertilizers, can be selectively directed to any part of the chassis where there are deposition devices of one or other product, even with the machine using a pneumatic selector and distribution system that connects the containers to the seed and fertilizer deposition devices through ducts.

### Summary of the invention

**AGRICULTURAL MACHINES,** which includes a central chassis section and hinged chassis portions articulated adjacent at each lateral end thereof; the central chassis section is perpendicularly attached to a tongue, the tongue having a fixed section integral with the central section and a telescopic distal section capable of moving axially relative to said fixed tongue section; the central chassis section is mounted on wheels and the free ends of said hinged chassis portions are mounted on corresponding lateral wheels; each hinged portion has an inextensible strut, one end of which is hinged on each side of the chassis, while the free end of each strut is hinged at the same distance of said telescopic tongue section, forming a deformable kinematic diamond; each hinged chassis portion is urged in reciprocal and reciprocating angular displacement with respect to the central chassis section from its extended chassis position in a working position substantially in line with the central chassis section until its folding against the sides of the tongue, configuring a transport position, parallel to said tongue; at least the central section and/or the hinged portions of the chassis have seed deposition and/or fertilizers devices comprising at least one container carried by the agricultural machine and driven from said container to said deposition devices; said at least one container is located over the area delimited by the central section of the chassis and the fixed tongue section; a pair of arms is hinged on the sides of said fixed tongue section, independently of the central chassis section and the arms are arranged coplanar to said central section to determine respective first articulations or joints in the axis of longitudinal symmetry of said central chassis section, in correspondence with the connection thereof to the fixed tongue section; respective hydraulic pistons are attached at a given point of said arms between their ends at a second articulation or joint; each of said hydraulic pistons are disposed obliquely on either side of the fixed tongue section and have the other ends attached to the same height of said tongue through corresponding third articulations or joints; each end of each arm opposite to the end with said first joint is in turn connected to a corresponding hinged chassis portion and the length of said arms is such that in the condition of unfolded and working position of the machine, the hinged portions of the chassis result adjacent the ends of the central chassis section; in the unfolded and working machine position said first pair of joints is located between the third pair of joints and the second pair of joints and said second pair of joints is closer to said central chassis section; characterized in that the distance of a point of attachment of each arm to said hinged chassis portions from said central chassis section is greater than the distance of said second joint with respect to said central chassis section but is smaller than the distance of said second joint from said central chassis section, and in that said wheels are contained within the area delimited by said central chassis section and said fixed tongue portion, said attachment point attach each arm to a corresponding hinged portion upon folding thereof describing an arc of circumference having a radius greater than the distance of said wheels from said central chassis section, to allow angular rotation of said hinged chassis portions without interference with said wheels.

### Detailed description of the enclosed drawings

For purposes of providing a preferred embodiment of the present invention, the following drawings are attached which illustrate, with the support of the description thereof, which this construction should be interpreted as one of many possible constructions of the invention, without assigning any limiting value to it, including within its scope of protection of the invention all the possible equivalent means to those illustrated; being the scope of the present invention determined by its first claim in the corresponding chapter of claims.

Also, in the drawings, same references identifies equal and/or equivalent means.
Figure 1 is a schematic and generic top perspective view of an embodiment of the present invention, seen in its working position;
Figure 2 is a simplified plan view of the machine of Figure 1, seen in its working position;
Figure 3 is a plan view of the machine of Figure 1, seen in its partially folded machine position;
Figure 4 is a plan view of the machine of Figure 1, seen in its folded machine position;
Figure 5 is an enlarged view of Figure 2;
Figure 6 is an enlarged view of Figure 3;
Figure 7 is an enlarged view of Figure 4;
Figure 8 illustrates the design conditions of the arms of the machine of the invention, in its preferred embodiment;
Figure 8a shows an enlarged detail of the arms and their angles of rotation;
Figure 9 shows an enlarged detail of the main set of supporting wheels, as applied to the machine of the invention; and
Figure 10 is a partial perspective view of the supporting wheels placed at the end of each hinged chassis portions.

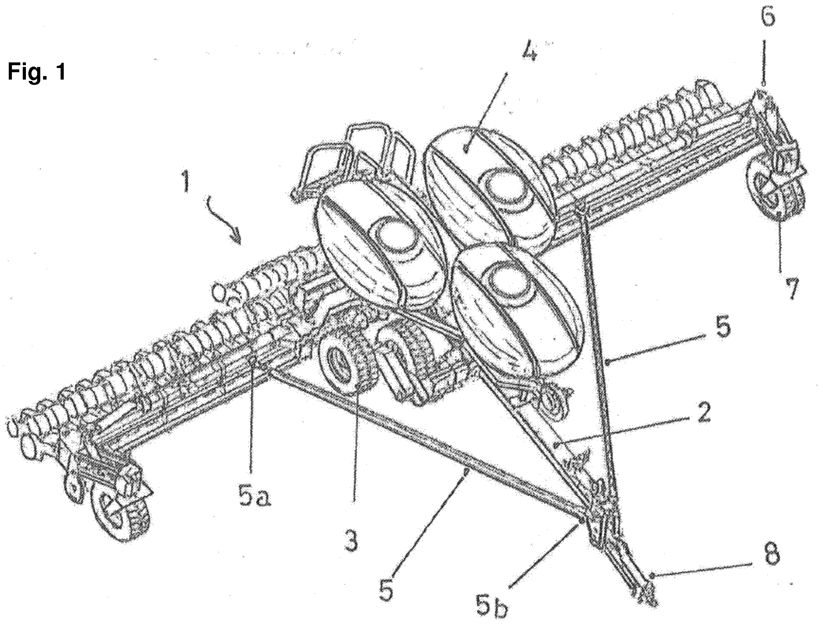

Figure 1 shows an embodiment of the invention in a schematic and generalized form. This figure is for the sole purpose of exemplifying the construction of the invention applied to a seeding machine. The figure shows the existence of a chassis in a working position generically indicated with (1), i.e. ready for its use in sowing and/or applying a fertilizer. In this figure a tongue (2) is perpendicularly attached to the chassis generically indicated with (1), and the wheels train (3). According to the present invention, the seed and/or fertilizer and/or agro-chemicals products are arranged over the area in which projects the wheel train (3) and part of the tongue (2) project. It is noted, according to the invention, that these containers or storage bins are of a large capacity volume and are not distributed over the entire chassis, but being located in the vicinity of the centre of gravity of the wheel train (3). On each side of the chassis (1) are linked articulately in (5a) respective inextensible braces arranged obliquely concurrent to corresponding joints (5b) to a same height of the telescoping distal section (2') of the tongue (2).

The fact of having a chassis (1) with folding capacity supported on a generic wheel train, equipped with a tongue (2), strut (5) and lateral wheels (7) articulated in (6) to the ends of the folding chassis (1), and a towing end (8) on the free end of the tongue, are constructions known in the art.

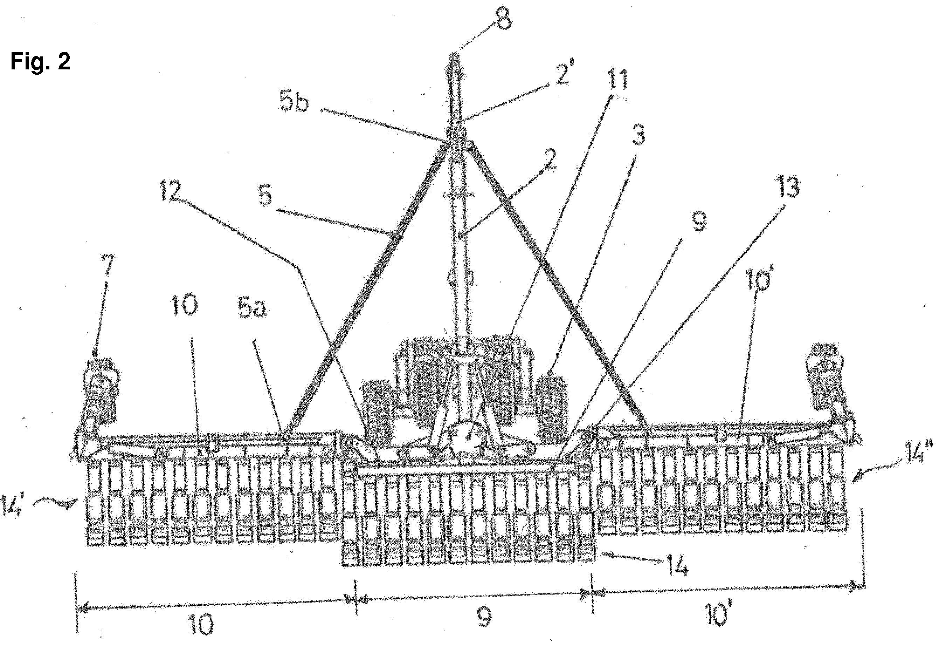

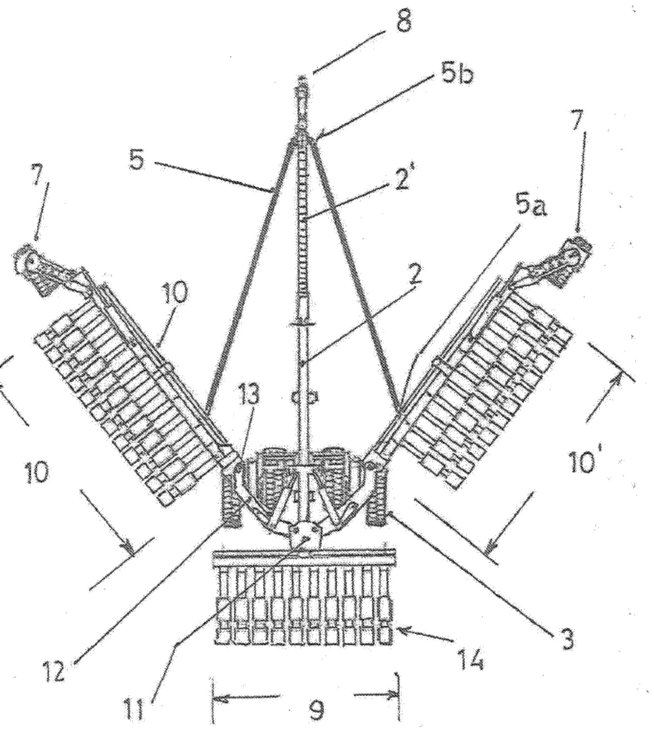

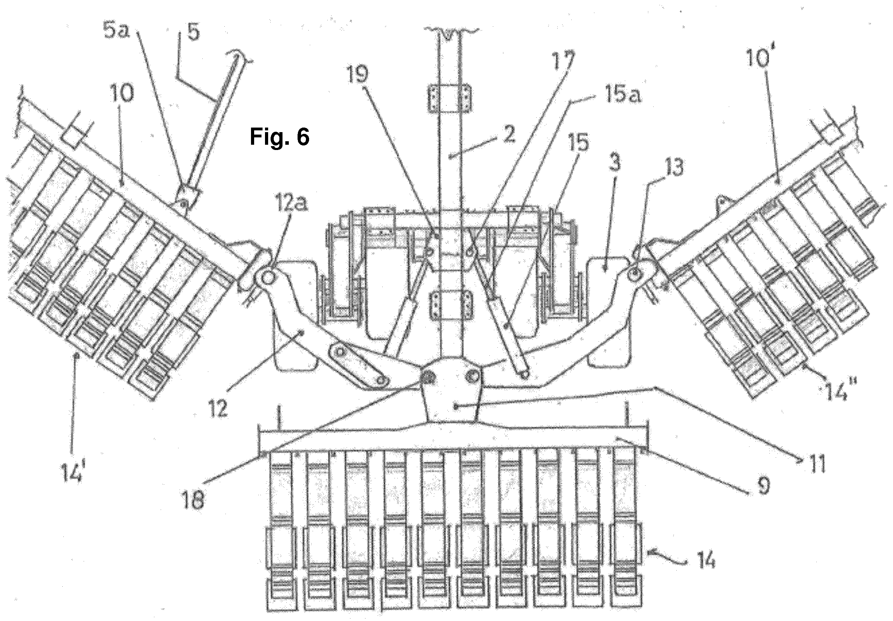

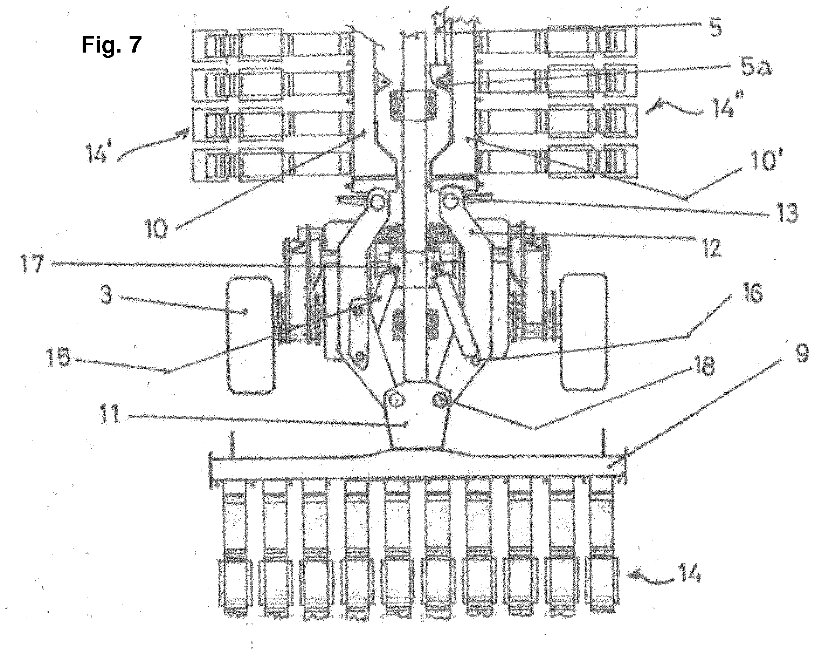

The novelty of the present invention lies in the following items, which are detailed below with the help of figures 2 to 10, namely,
a) The location of the containers or hoppers (4) is concentrated as shown in Figure 1. In fact, this location of the large capacity hoppers or containers, from about 1,400 liters to 4800 liters is not generic, and allows the variable weight of the cargo to be concentrated within the centre of gravity of the machine, whereas in the prior art constructions, said unstable charge spreads throughout the chassis in a multiplicity of containers of much smaller capacity. Due to the allocation of seeds and/or fertilizers, as occurs with the Brazilian anteriority indicated above, the load variation can be significant, creating strong imbalances in the prior art machines, a situation that the arrangement shown in this figure 1 of the invention solves. In addition, this arrangement allows for the reloading of the material even when the machine is in full operational operation, filling a few hoppers or containers, rather than having to fill a multiplicity of smaller containers.
b) This invention allows to achieve a total width of the central chassis section of the machine compatible within limits imposed by road travel regulations. The prior art agricultural machinery has, when folded, (that is, in its road travel condition) a total front width of over 4 meters, while the planter machinery of the present invention allows a working width span (in its working position) which is greater than double the width when in its folded position (road travel or transport condition), e.g., a total frontal width of less than 4 meters, being this achieved in an agricultural machinery having up to 44 sowing lines, with a total deployed span from 8.4 up to 9 meters.

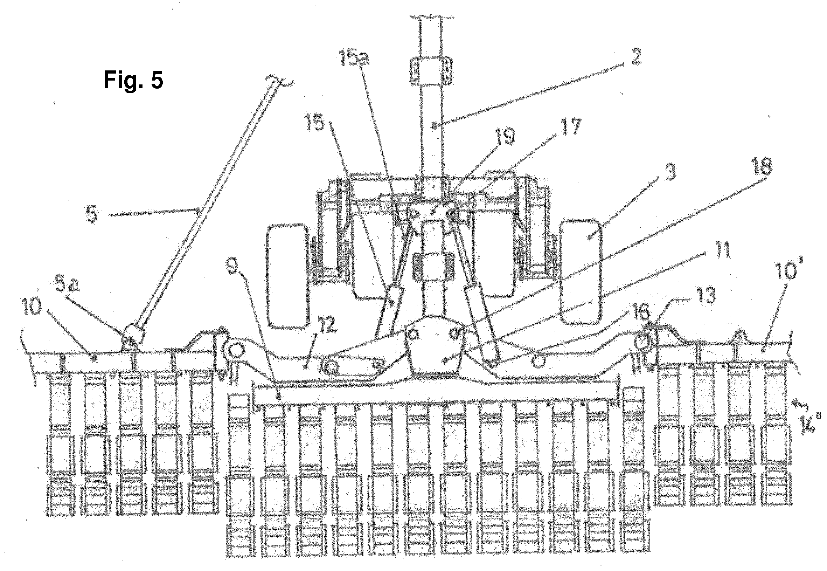

Figures 2 to 4 shows a top view of an embodiment of the present invention as applied to a seeder/fertilizing machine, which in Figure 2 is shown in its unfolded (working) position, i.e. is ready for agricultural use. In these figures and the later one, the containers (4) have been eliminated so as not to disturb said figures. Figure 2 with its reference (2) indicates the portion of the fixed section of the tongue while being (2') the section of the tongue telescopically slideable outwards. In Figure 2 the telescopic distal section (2') is fully retracted within the fixed section (2) of the tongue. The chassis of the planter have a central chassis section (9) and two hinged chassis portions, respectively (10, 10'). According to the present invention, and in contrast to the prior art, the fertilizer and/or seed deposition devices such as the illustrated sowing line (14) of the central chassis section (9) are directly linked to it, but the hinged chassis portions (10, 10') are not directly linked to said central chassis section (9). According to the present invention, the fixed section (2) of the tongue is connected perpendicular and in the axis of symmetry to the central chassis section (9), for example by means of plates (11), being superimposed and spaced apart and being placed one lower and one upper on said tongue adjacent to its central chassis section (9). On each side of said plates (see Figures 5, 6, 7 and 8) and between said pair of plates (11) articulates respectively an arm (12, 12') by means of a first articulation or joint (18) (see Figure 3) substantially coplanar to the plates (11). The hinged chassis portions (10, 10') are articulated at opposite ends (13). To said hinged chassis portions is also articulated at (5a) strut (5), which in turn have their other end articulated at (5b) to a stretch of the telescopic distal section (2'). In Figure 2 it is possible to observe the relative dimensions representing the length of the chassis (9, 10, 10') and the position of the lateral wheels (7). The seed deposition and/or fertizers devices (14, 14', 14") are linked respectively to the central chassis section (9) and to the hinged chassis portion (10, 10') and are displaceable along with said chassis.

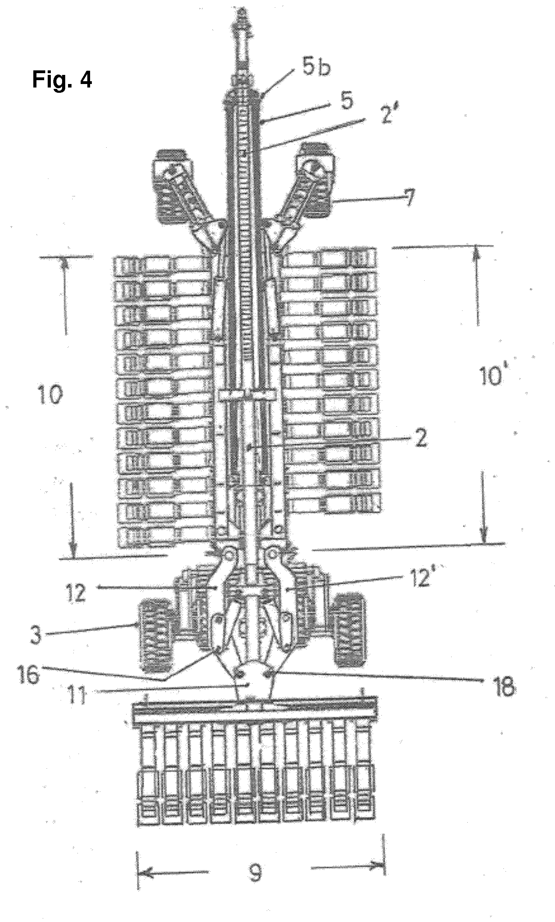

Figure 3 shows the same arrangement of Figure 2, with the lengths of the hinged chassis portions (10, 10') in the process of folding, and Figure 4 shows the same arrangement, with the chassis fully folded, in its travel or transport position.

The following Figures 5, 6 and 7 shows an enlarged detail of the previous Figures 2, 3 and 4, allowing to visualize the constructive characteristics of the present invention and its working. Reference (15) indicates the hydraulic pistons articulated through second articulations or joints (16) to the respective arms (12), while the cylinder stem (15a) are articulated to the telescopic tongue (2') by means of third articulations or joints (17) on both sides of a plate (19), secured to (2) and place at a distance from (11). Obviously, this arranged can be changed, and the stem can be articulated to the arms (12) while the piston body is articulated to the telescopic tongue (2'). Each arm (12, 12') is articulated by means of said first articulations (18) to plates (11), which in turn are linked to both the fixed tongue at its union with the central chassis section (9). As said, ideally there are two parallel and separate plates (11) between which arms (12) are articulated by first articulations or joints (18), although this arrangement can vary, according to what is already known in the art, for example using a single plate (11).

Figures 5, 6, 7, 8 and 8a allows to observe that the arms in turn can be formed by two equal profiled flat plates, arranged one above the other and separated from each other, between which they are articulated at (16) the hydraulic pistons (15). This last arrangement can also be replaced by arms (12) shaped as already mentioned, by a single plate. On the right side of these three figures the flat plate of the upper arm (12) has been eliminated, illustrating the articulation in (16) of said pistons.

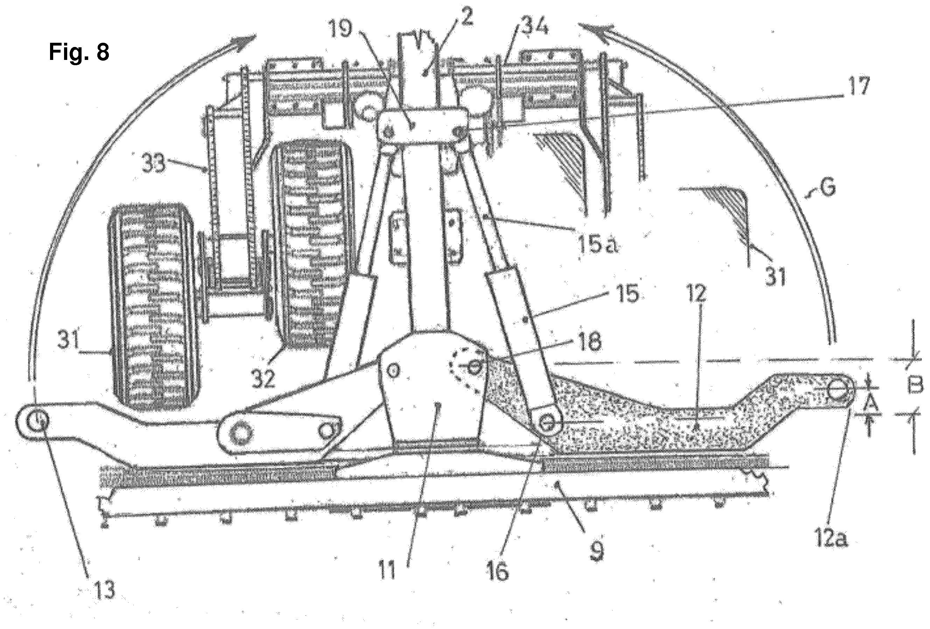

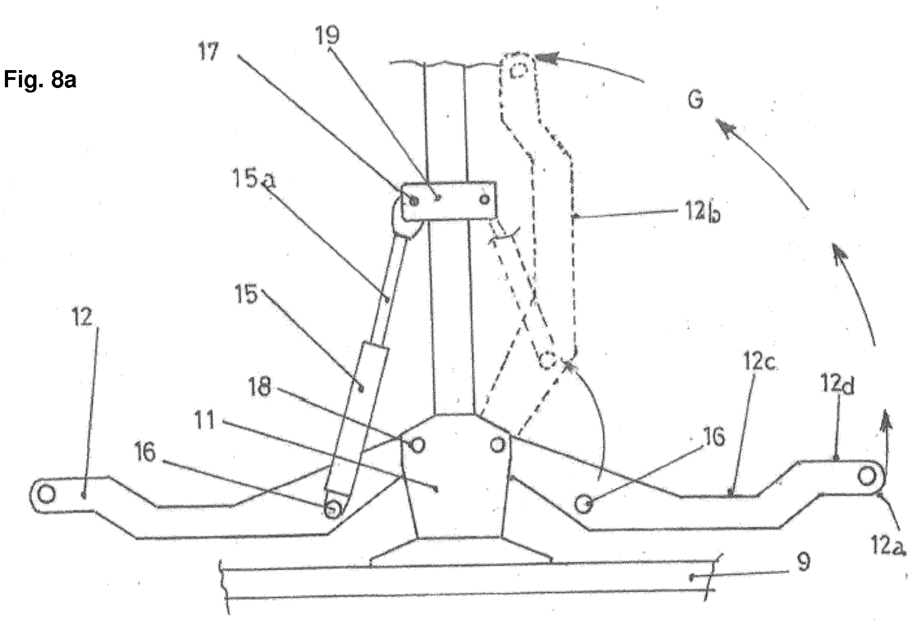

Figure 8 also allows to observe the arc of circumference "G" of the attachment point (12a) of the arms (12) while performing the folding thereof, and the particular design of the arrangement of the wheels train (3) allowing said rotation, with the relative location of the axes of rotation of the angularly displaceable arms.

Said wheel train (3), preferably presents a pair of wheels (31) with its axis aligned parallel to the central chassis section (9) and displaced towards same. This pair of wheels (31) have a gauge larger than a second pair of wheels (32), arranged downstream of the first pair of wheels (31) in the direction of advancement of the machine, having this second pair (32) a smaller gauge and they have their axis parallel to the axis of wheels (31), arranged in pairs on each side of the tongue (2). Each pair of wheels (31, 32) on either side of said tongue are linked on each side of a rocker arm (33), which in turn is linked to a transverse axis (34) integral with the rear portion of the tongue (2). This assembly is provided with known dampening means, such as torsion arms, shock absorbers, etc. (not illustrated). In Figure 8 it may be also noticed that arc of circumference "G" of the arm (12) is allowed to traverse angularly without interference from said wheels assembly. It is thus noted the advantage of having rearwardly displaced external wheels (31) endowing them with a gauge practically equal to the length of the central chassis section (9) and the having a reduced gauge for the internal wheels (32), while placing them before the pair of wheels (31), and this allows the arms (12) to fold until they are parallel and adjacent to the tongue (2). (See Figure 8a). This arrangement also achieves that the bearing train is of the traction type, that is, each rocker arm (33) is placed in front of the wheels, and at the same time, this design allows the transverse axis (34) to be shorter than the maximum gauge given by wheels (31). This arrangement allows to increase the mass distribution of the machinery on the ground, and increase its stability, even over rough ground.

Regarding the relationship of the rotation axis of each arm, in Figure 8 it is observed that the first articulation (18) of each arm with respect to the plate (11) is located farthest from the central chassis section (9) with regards to the second articulation or joint (16) of the piston (15) on the arm (12) is arranged closest to said central chassis section (9), resulting in the distance "B" between (18, 16) being less than the distance "A" between the linking centre of the hinged chassis portion (10, 10') to the arm (12) and the second articulation or joint (16). This arrangement allows reducing the length of the arm (12), while at the same time allowing the sowing lines of the central section and hinged portions of the chassis to be placed adjacent and uniformly separated in the unfolded or working position.

Figure 8a shows additional details of the arm (12). It is also noted that said arm after its first articulation (18) projects in the plane towards the central chassis section (9) so as to form a concavity (12c), resulting in the attachment point (12a) with the hinged chassis portion (10, 10') at a greater distance (12d) from the central section of the chassis (9), which allows it to be fastened without problems against the plate (19) on which the cylinder stem (15a) of the piston (15) is hinged.

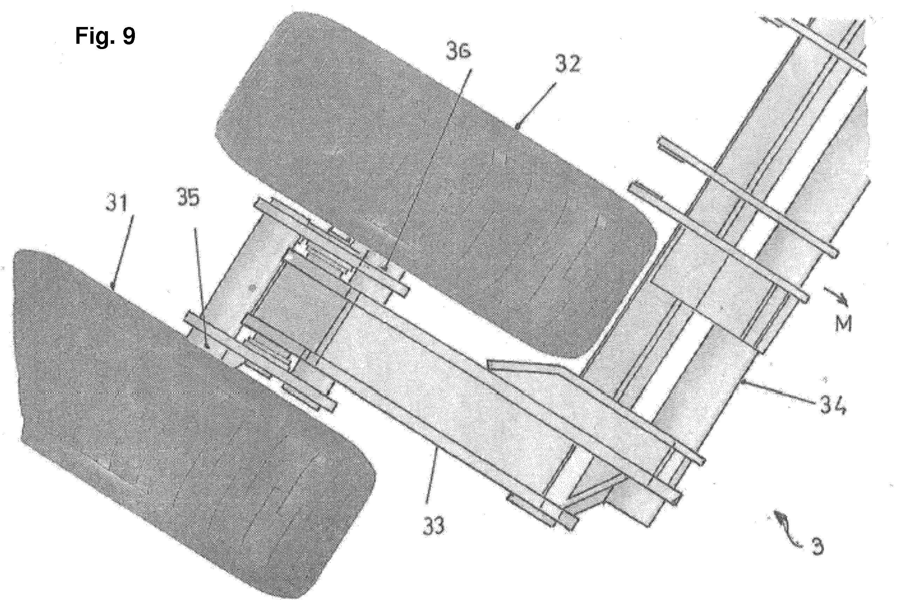

Figure 9 illustrates the preferred construction of the main supporting wheel train of the machine of the present invention. Note that, with a single rocker arm (33) the wheels (31, 32) on one side are linked in the arrangement already detailed, resulting in the transverse axis (34) arranged upstream according to the direction of travel "M", which it allows to act on the damping associated with each rocker (33) working as tractioned wheels, at the same time reducing the length of said transverse axis (34).

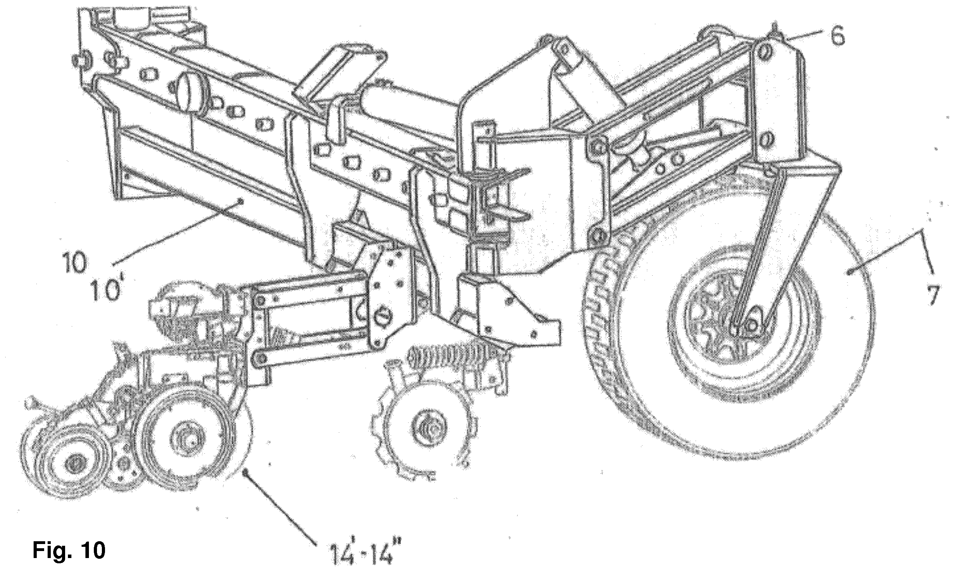

Finally, Figure 10 shows one of the possible constructions of the wheels (7) arranged at the end of each side of the hinged chassis portion (10, 10'). It is observed that this wheel (7) turns freely on its vertical axis (6) and is supported on a generic damping grid known in the art, as this figure shows. The result of this wheel arrangement, although the same is already teached by, for instance, by the mentioned Brazilian patent, allows this agricultural machinery to achieve at all times and on any ground its clearance from said ground level, while during its folding and transport disposition the central section and hinged portions of the chassis remains constantly seated on its wheels (31, 32, 7), the latter being an important result of the present invention.

## Claims

1. An agricultural machine comprising:
- a chassis (1) formed by a central section (9) and hinged portions (10, 10') at each lateral end thereof;
- a tongue (2) attached to said central chassis section (9) perpendicularly thereto, said tongue (2) having a fixed section integral with said central section (9) and a telescopic distal section (2') capable of moving axially relative to said fixed tongue section (2);
wherein said central chassis section (9) is mounted on wheels (3, 31, 32), and the free ends of said hinged portions (10, 10') are mounted on corresponding lateral wheels (7);
wherein each hinged portion (10, 10') has an inextensible strut (5), one end of which is hinged on each side of the chassis, while the free end of each strut (5) is hinged at the same distance of said telescopic tongue section (2'), forming a deformable kinematic diamond;
wherein each hinged chassis portion (10, 10') is urged in reciprocal and reciprocating angular displacement with respect to said central chassis section (9) from its extended chassis position in a working position substantially in line with the central chassis section (9) until its folding against the sides of said tongue (2), configuring a transport position, parallel to said tongue (2);
wherein at least the central section (9) and/or the hinged portions (10, 10') of the chassis have seed deposition and/or fertilizers devices comprising at least one container (4) carried by said agricultural machine and driven from said container (4) to said deposition devices (14, 14', 14");
wherein said at least one container (4) is located over the area delimited by the central section (9) of the chassis and the fixed tongue section (2);
wherein a pair of arms (12, 12') is hinged on the sides of said fixed tongue section (2), independently of the central chassis section (9), said arms being arranged coplanar to said central section (9) to determine respective first articulations or joints (18) in the axis of longitudinal symmetry of said central chassis section (9), in correspondence with the connection thereof to the fixed tongue section (2);
wherein respective hydraulic pistons (15) are attached at a given point of said arms (12, 12') between their ends at a second articulation or joint (16);
wherein each of said hydraulic pistons (15) are disposed obliquely on either side of the fixed tongue section (2) and have the other ends attached to the same height of said tongue (2) through corresponding third articulations or joints (17);
wherein each end of each arm (12, 12') opposite to the end with said first joint (18) is in turn connected to a corresponding hinged chassis portion (10, 10'), the length of said arms (12, 12') being such that in the condition of unfolded and working position of the machine, the hinged portions (10, 10') of the chassis result adjacent the ends of the central chassis section (9);
wherein in the unfolded and working machine position said first pair of joints (18) is located between the third pair of joints (17) and the second pair of joints (16), said second pair of joints (16) being closer to said central chassis section (9);
**characterized in that** the distance of a point (12a) of attachment of each arm (12, 12') to said hinged chassis portions (10, 10') from said central chassis section (9) is greater than the distance of said second joint (16) with respect to said central chassis section (9) but is smaller than the distance of said second joint (18) from said central chassis section (9), and **in that** said wheels (3, 31, 32) are contained within the area delimited by said central chassis section (9) and said fixed tongue portion (2), said attachment point (12a) each arm (12, 12') to a corresponding hinged portion (10, 10') upon folding thereof describing an arc of circumference (G) having a radius greater than the distance of said wheels (3, 31, 32) from said central chassis section (9), to allow angular rotation of said hinged chassis portions (10, 10') without interference with said wheels (3, 31, 32).

2. Agricultural machine according to claim 1, **characterized in that** it has three reservoirs (4) mounted on and attached to the machine in said area delimited by said central chassis section (9) and said fixed tongue portion (2).

3. Agricultural machine according to claim 1 and 2, **characterized in that** said fixed tongue section (2) is connected perpendicular to said central chassis portion (9) by means of two profiled plates (11) reciprocally superimposed and spaced apart, said profiled plates (11) being in turn fixed between a pair of integral plates fixed at the end of said fixed tongue (2), said hydraulic pistons (15) being disposed respectively, with their hinges (18) between said plates (11) of the corresponding arms.

4. Agricultural machine according to claim 1 and 3, **characterized in that** said wheels (30) define a wheel train (3) and comprise a first pair of wheels (31) adjacent to the central section (9) and having a gauge larger than a second pair of wheels (32) arranged downstream of said first pair of wheels (31) in the direction of advancement of the machine, said first and second pairs of wheels (31, 32) being disposed with the tongue (2) intermediate thereto, the wheels on the same side of the machine being connected with their axles to a common rocker arm (33), in turn linked to a transverse axis (34) integral with the rear portion of said tongue (2).

5. Agricultural machine according to claim 5, **characterized in that** each of said arms (12, 12') has a portion between said first articulation (18) and said plate (11) projecting in the plane up to said central chassis portion (9) to form a concavity (12c) ending with said point of attachment (12a) and with the respective hinged portions (10, 10') at the maximum distance from the said central chassis section (9).

6. Agricultural machine according to claim 1, **characterized in that** said wheels (7) are mounted at each hinged chassis portions (10, 10') by means of a respective rocker arm (33) that is freely rotating about a vertical axis (6).

7. Agricultural machine according to claim 1 to 6, **characterized in that** in its folded position said central chassis section (9) has a width of less than 4 meters.

8. Agricultural machine according to claim 1 to 6, **characterized in that** each hydraulic piston (15) has a cylinder body attached to a respective arm (12, 12') and a cylinder stem (15a) pivotally connected to said telescopic tongue portion (2').

9. Agricultural machine according to claim 1 to 6, **characterized in that** the overall width of the machine in its working position is greater than twice the width of the machine in the folded position for transport.

## Patentansprüche

1. Landwirtschaftliche Maschine, Folgendes umfassend:
- ein Chassis (1), das aus einem zentralen Abschnitt (9) und gelenkigen Teilen (10, 10') an jedem seitlichen Ende davon gebildet ist;
- eine Zunge (2), die an dem zentralen Abschnitt (9) des Chassis senkrecht zu diesem angebracht ist, wobei die Zunge (2) einen feststehenden Abschnitt aufweist, der mit dem zentralen Abschnitt (9) einstückig ist, und einen teleskopischen distalen Abschnitt (2'), der fähig ist, sich axial relativ zu dem feststehenden Zungenabschnitt (2) zu bewegen;
wobei der zentrale Abschnitt (9) des Chassis auf Rädern (3, 31, 32) montiert ist und die freien Enden der gelenkigen Teile (10, 10') auf entsprechenden seitlichen Rädern (7) montiert sind;
wobei jeder gelenkige Teil (10, 10') eine nicht ausfahrbare Strebe (5) aufweist, deren eines Ende an jeder Seite des Chassis angelenkt ist, während das freie Ende jeder Strebe (5) im gleichen Abstand von dem teleskopischen Zungenabschnitt (2') angelenkt ist, wobei eine verformbare kinematische Raute gebildet wird;
wobei jeder gelenkige Teil (10, 10') des Chassis in einer gegenseitigen und hin- und hergehenden Winkelverschiebung in Bezug auf den zentralen Abschnitt (9) des Chassis aus seiner ausgefahrenen Chassisposition in einer Arbeitsposition im Wesentlichen in einer Linie mit dem zentralen Abschnitt (9) des Chassis bis zu seinem Falten gegen die Seiten der Zunge (2) gezwungen wird, wobei eine Transportposition parallel zu der Zunge (2) ausgebildet wird;
wobei mindestens der zentrale Abschnitt (9) und/oder die gelenkigen Teile (10, 10') des Chassis Saatgutablage- und/oder Düngemittelvorrichtungen aufweisen, die mindestens einen Behälter (4) umfassen, der von der landwirtschaftlichen Maschine getragen und von dem Behälter (4) zu den Ablagevorrichtungen (14, 14', 14") gefahren wird;
wobei der mindestens eine Behälter (4) über dem Bereich angeordnet ist, der durch den zentralen Abschnitt (9) des Chassis und den feststehenden Zungenabschnitt (2) begrenzt ist;
wobei ein Paar Arme (12, 12') an den Seiten des feststehenden Zungenabschnitts (2) unabhängig von dem zentralen Abschnitt (9) des Chassis angelenkt ist, wobei die Arme koplanar zu dem zentralen Abschnitt (9) angeordnet sind, um entsprechende erste Gelenke oder Verbindungen (18) in der Längssymmetrieachse des zentralen Abschnitts (9) des Chassis in Übereinstimmung mit der Anbindung davon mit dem feststehenden Zungenabschnitt (2) zu bestimmen;
wobei jeweilige Hydraulikkolben (15) an einem gegebenen Punkt der Arme (12, 12') zwischen deren Enden an einem zweiten Gelenk oder einer zweiten Verbindung (16) angebracht sind;
wobei jeder der Hydraulikkolben (15) schräg auf jeder Seite des feststehenden Zungenabschnitts (2) angeordnet ist und die anderen Enden auf der gleichen Höhe der Zunge (2) durch entsprechende dritte Gelenke oder Verbindungen (17) angebracht sind;
wobei jedes Ende jedes Arms (12, 12'), das dem Ende mit der ersten Verbindung (18) gegenüberliegt, seinerseits mit einem entsprechenden gelenkigen Teil (10, 10') des Chassis verbunden ist, wobei die Länge der Arme (12, 12') so ist, dass im Zustand der ausgefalteten Arbeitsposition der Maschine die gelenkigen Teile (10, 10') des Chassis benachbart zu den Enden des zentralen Abschnitts (9) des Chassis liegen;
wobei in der ausgefalteten Arbeitsposition der Maschine das erste Paar von Verbindungen (18) zwischen dem dritten Paar von Verbindungen (17) und dem zweiten Paar von Verbindungen (16) positioniert ist, wobei das zweite Paar von Verbindungen (16) näher an dem zentralen Abschnitt (9) des Chassis liegt;
**dadurch gekennzeichnet, dass** der Abstand eines Punkts (12a) der Befestigung jedes Arms (12, 12') an den gelenkigen Teilen (10, 10') des Chassis von dem zentralen Abschnitt (9) des Chassis größer ist als der Abstand der zweiten Verbindung (16) in Bezug auf den zentralen Abschnitt (9) des Chassis, aber kleiner ist als der Abstand der zweiten Verbindung (18) von dem zentralen Abschnitt (9) des Chassis, und dadurch, dass
die Räder (3, 31, 32) innerhalb des Bereichs enthalten sind, der durch den zentralen Abschnitt (9) des Chassis und den feststehenden Zungenteil (2) begrenzt ist, wobei der Befestigungspunkt (12a) jedes Arms (12, 12') an einem entsprechenden gelenkigen Teil (10, 10') beim Falten davon einen Umfangsbogen (G) mit einem Radius beschreibt, der größer ist als der Abstand der Räder (3, 31, 32) von dem zentralen Abschnitt (9) des Chassis, um eine Winkeldrehung der gelenkigen Teile (10, 10') des Chassis ohne Störung der Räder (3, 31, 32) zu ermöglichen.

2. Landwirtschaftliche Maschine nach Anspruch 1, **dadurch gekennzeichnet, dass** sie drei Vorratsbehälter (4) aufweist, die an der Maschine in dem durch den zentralen Abschnitt des Chassis (9) und den feststehenden Zungenteil (2) begrenzten Bereich montiert und angebracht sind.

3. Landwirtschaftliche Maschine nach Anspruch 1 und 2, **dadurch gekennzeichnet, dass** der feststehende Zungenabschnitt (2) senkrecht zu dem zentralen Teil (9) des Chassis mittels zweier profilierter Platten (11) verbunden ist, die wechselseitig übereinander liegen und voneinander beabstandet sind, wobei die profilierten Platten (11) ihrerseits zwischen einem Paar einstückiger Platten befestigt sind, die am Ende der feststehenden Zunge (2) fixiert sind, wobei die Hydraulikkolben (15) jeweils mit ihren Scharnieren (18) zwischen den Platten (11) der entsprechenden Arme angeordnet sind.

4. Landwirtschaftliche Maschine nach Anspruch 1 und 3, **dadurch gekennzeichnet, dass** die Räder (30) einen Radsatz (3) bilden und ein erstes Paar Räder (31) umfassen, das an den zentralen Abschnitt (9) angrenzt und eine größere Spurweite aufweist als ein zweites Paar Räder (32), das in Vorschubrichtung der Maschine stromabwärts von dem ersten Paar Räder (31) angeordnet ist, wobei das erste und das zweite Radpaar (31, 32) mit der Zunge (2) dazwischen angeordnet sind, wobei die Räder auf derselben Seite der Maschine mit ihren Achsen mit einem gemeinsamen Kipphebel (33) verbunden sind, der seinerseits mit einer Querachse (34) verbunden ist, die einstückig mit dem hinteren Teil der Zunge (2) ist.

5. Landwirtschaftliche Maschine nach Anspruch 5, **dadurch gekennzeichnet, dass** jeder der Arme (12, 12') einen Teil zwischen dem ersten Gelenk (18) und der Platte (11) aufweist, der in der Ebene bis zum zentralen Teil (9) des Chassis vorsteht, um eine Konkavität (12c) zu bilden, die mit dem Punkt der Befestigung (12a) und mit den jeweiligen gelenkigen Teilen (10, 10') in maximalem Abstand vom zentralen Abschnitt (9) des Chassis endet.

6. Landwirtschaftliche Maschine nach Anspruch 1, **dadurch gekennzeichnet, dass** die Räder (7) an jedem gelenkigen Teil (10, 10') des Chassis mittels eines jeweiligen Kipphebels (33) montiert sind, der frei um eine vertikale Achse (6) drehbar ist.

7. Landwirtschaftliche Maschine nach Anspruch 1 bis 6, **dadurch gekennzeichnet, dass** der zentrale Abschnitt (9) des Chassis in seiner gefalteten Position eine Breite von weniger als 4 Metern aufweist.

8. Landwirtschaftliche Maschine nach Anspruch 1 bis 6, **dadurch gekennzeichnet, dass** jeder Hydraulikkolben (15) einen Zylinderkörper aufweist, der an einem jeweiligen Arm (12, 12') angebracht ist, und einen Zylinderschaft (15a), der schwenkbar mit dem teleskopischen Zungenteil (2') verbunden ist.

9. Landwirtschaftliche Maschine nach Anspruch 1 bis 6, **dadurch gekennzeichnet, dass** die Gesamtbreite der Maschine in ihrer Arbeitsposition mehr als doppelt so groß ist wie die Breite der Maschine in der gefalteten Position für den Transport.

## Revendications

1. Une machine agricole comprenant
- un châssis (1) formé par une section centrale (9) et des parties articulées (10, 10') à chacune de ses extrémités latérales ;
- une languette (2) fixée perpendiculairement à ladite section centrale du châssis (9), ladite languette (2) ayant une section fixe solidaire de ladite section centrale (9) et une section de languette télescopique (2') capable de se déplacer axialement par rapport à ladite section fixe de la languette (2) ;
dans laquelle ladite section centrale du châssis (9) est montée sur des roues (3, 31, 32), et les extrémités libres de ces parties articulées (10, 10') sont montées sur des roues latérales correspondantes (7) ;
dans laquelle chaque partie articulée (10, 10') comporte une jambe de force inextensible (5), dont une extrémité est articulée de chaque côté du châssis, tandis que l'extrémité libre de chaque jambe de force (5) est articulée à la même distance de ladite section de languette télescopique (2'), formant ainsi un diamant cinématique déformable ;
dans lequel chaque partie de châssis articulée (10, 10') est poussée en déplacement angulaire réciproque et réciproquant par rapport à ladite section de châssis centrale (9) depuis sa position de châssis étendue dans une position de travail sensiblement en ligne avec la section de châssis centrale (9) jusqu'à son pliage contre les côtés de ladite languette (2), configurant une position de transport, parallèle à ladite languette (2) ;
dans lequel au moins la section centrale (9) et/ou les parties articulées (10, 10') du châssis comportent des dispositifs de dépôt de semences et/ou d'engrais comprenant au moins un conteneur (4) porté par ladite machine agricole et entraîné depuis ledit conteneur (4) vers lesdits dispositifs de dépôt (14, 14', 14"));
dans lequel ledit au moins un conteneur (4) est situé sur la zone délimitée par la section centrale (9) du châssis et la section de la languette fixe (2) ;
dans laquelle une paire de bras (12, 12') est articulée sur les côtés de ladite section de languette fixe (2), indépendamment de la section centrale du châssis (9), lesdits bras étant disposés coplanairement à ladite section centrale (9) pour déterminer les premières articulations ou joints respectifs (18) dans l'axe de symétrie longitudinale de ladite section centrale du châssis (9), en correspondance avec la connexion de cette dernière à la section de languette fixe (2);
dans lequel les pistons hydrauliques respectifs (15) sont fixés en un point donné desdits bras (12, 12') entre leurs extrémités à une deuxième articulation ou joint (16) ;
dans lequel chacun de ces pistons hydrauliques (15) est disposé obliquement de chaque côté de la section de langue fixe (2) et a les autres extrémités attachées à la même hauteur de ladite langue (2) par des troisièmes articulations ou joints correspondants (17) ;
dans lequel chaque extrémité de chaque bras (12, 12') opposée à l'extrémité avec ladite première articulation (18) est à son tour reliée à une partie de châssis articulée correspondante (10, 10'), la longueur de ces bras (12, 12') étant telle qu'en position dépliée et de travail de la machine, les parties articulées (10, 10') du châssis sont adjacentes aux extrémités de la section centrale du châssis (9) ;
dans laquelle, en position dépliée et en position de travail, ladite première paire d'articulations (18) est située entre la troisième paire d'articulations (17) et la deuxième paire d'articulations (16), ladite deuxième paire d'articulations (16) étant plus proche de ladite section centrale du châssis (9) ;
**caractérisé en ce que** la distance d'un point (12a) de fixation de chaque bras (12, 12') auxdites parties de châssis articulées (10, 10') par rapport à ladite section de châssis central (9) est supérieure à la distance de ladite deuxième articulation (16) par rapport à ladite section de châssis central (9) mais est inférieure à la distance de ladite deuxième articulation (18) par rapport à ladite section de châssis central (9), et **en ce que**
lesdites roues (3, 31, 32) sont contenues dans la zone délimitée par ladite section centrale du châssis (9) et ladite partie fixe de la languette (2), ledit point de fixation (12a) chaque bras (12, 12') à une partie articulée correspondante (10, 10') décrivant, lors de leur pliage, un arc de circonférence (G) dont le rayon est supérieur à la distance desdites roues (3, 31, 32) par rapport à ladite section centrale du châssis (9), afin de permettre une rotation angulaire desdites parties articulées du châssis (10, 10') sans interférence avec lesdites roues (3, 31, 32).

2. Machine agricole selon la revendication 1, **caractérisée en ce qu'**elle comporte trois réservoirs (4) montés et fixés sur la machine dans ladite zone délimitée par ladite section centrale du châssis (9) et ladite partie fixe de la languette (2).

3. Machine agricole selon les revendications 1 et 2, **caractérisée en ce que** ladite section de languette fixe (2) est reliée perpendiculairement à ladite partie centrale du châssis (9) au moyen de deux plaques profilées (11) réciproquement superposées et espacées, lesdites plaques profilées (11) étant à leur tour fixées entre une paire de plaques intégrales fixées à l'extrémité de ladite languette fixe (2), lesdits pistons hydrauliques (15) étant disposés respectivement, avec leurs charnières (18) entre lesdites plaques (11) des bras correspondants.

4. Machine agricole selon les revendications 1 et 3, **caractérisée en ce que** lesdites roues (30) définissent un train de roues (3) et comprennent une première paire de roues (31) adjacente à la section centrale (9) et ayant un gabarit supérieur à une seconde paire de roues (32) disposée en aval de ladite première paire de roues (31) dans le sens d'avancement de la machine, lesdites première et deuxième paires de roues (31, 32) étant disposées avec la languette (2) intermédiaire, les roues du même côté de la machine étant reliées par leurs essieux à un balancier commun (33), lui-même relié à un axe transversal (34) solidaire de la partie arrière de ladite languette (2).

5. Machine agricole selon la revendication 5, **caractérisée en ce que** chacun desdits bras (12, 12') a une partie entre ladite première articulation (18) et ladite plaque (11) faisant saillie dans le plan jusqu'à ladite partie centrale du châssis (9) pour former une concavité (12c) se terminant par ledit point d'attache (12a) et par les parties articulées respectives (10, 10') à la distance maximale de ladite partie centrale du châssis (9).

6. Machine agricole selon la revendication 1, **caractérisée en ce que** lesdites roues (7) sont montées sur chaque partie articulée du châssis (10, 10') au moyen d'un balancier respectif (33) qui tourne librement autour d'un axe vertical (6).

7. Machine agricole selon les revendications 1 à 6, **caractérisée par le fait qu'**en position repliée, la partie centrale du châssis (9) a une largeur inférieure à 4 mètres.

8. Machine agricole selon la revendication 1 à 6, **caractérisée en ce que** chaque piston hydraulique (15) a un corps de cylindre fixé à un bras respectif (12, 12') et une tige de cylindre (15a) reliée de manière pivotante à ladite partie de langue télescopique (2').

9. Machine agricole selon les revendications 1 à 6, **caractérisée en ce que** la largeur totale de la machine en position de travail est supérieure à deux fois la largeur de la machine en position repliée pour le transport.
